# EUROPÄISCHE PATENTSCHRIFT

(11) **EP 3 253 566 B1**
(45) Veröffentlichungstag und Bekanntmachung des Hinweises auf die Patenterteilung: **01.11.2023**
(21) Anmeldenummer: 16702399.3
(22) Anmeldetag: 29.01.2016
(51) Int. Cl.: B30B 11/02, B30B 11/26, B30B 15/02, B22F 3/105, B29C 67/00, B30B 15/06, B22F 3/03, B33Y 80/00

(54) **GESTALTOPTIMIERTE PM-WERKZEUGKOMPONENTEN UNTER VERWENDUNG VON VERBINDUNGSTECHNOLOGIE**
SHAPE-OPTIMIZED PM TOOL COMPONENTS USING CONNECTION TECHNOLOGY
COMPOSANTS À FORME OPTIMISÉE D'OUTILS POUR LA MÉTALLURGIE DES POUDRES, RÉALISÉS À L'AIDE DE LA TECHNOLOGIE D'ASSEMBLAGE

(30) Priorität: 02.02.2015 DE 102015201784
(43) Veröffentlichungstag der Anmeldung: 13.12.2017
(73) Patentinhaber: GKN Sinter Metals Engineering GmbH, 42477 Radevormwald (DE)
(72) Erfinder: SCHMITT, Rainer, 53343 Wachtberg (DE); TEKINES, Hasim, 53343 Wachtberg (DE); SIEGERT, Christian, 53474 Ahrweiler (DE)
(74) Vertreter: Rössler, Matthias
(86) Internationale Anmeldenummer: PCT/EP2016/051938
(87) Internationale Veröffentlichungsnummer: WO 2016/124498

(56) Entgegenhaltungen:
- EP-A2- 1 764 173
- WO-A2-01/12367
- DE-A1- 3 241 383
- DE-A1- 4 203 572
- JP-A- 2004 291 046

## Beschreibung

Die vorliegende Erfindung betrifft eine Stempeleinheit einer Pulverpresse und ineinander gleitende Stempeleinheiten einer Pulverpresse. Auch wird eine Pulverpresse vorgeschlagen wie auch ein Verfahren zum Betrieb der Pulverpresse, insbesondere bei der Verwendung von metallischen Pulvern, die beispielsweise noch gesintert oder anders erwärmt werden müssen.

Aus der DE 10 2014 003 726 der Anmelderin ist ein Aufbau von Werkzeugelementen einer Pulverpresse durch zum Beispiel das additive Verfahren des Lasersinterns beschrieben. Die dort hervorgehenden Stempel weiten sich von einem ersten Ende, dem Kopfstück, bis zum zweiten Ende, dem Fußbereich, in der Weise auf, dass das zweite Ende dem Durchmesser des Stempelhalters entspricht und im Inneren des zweiten Endes weitere Stempel oder Kombinationen von Stempelkopfstück und gestaltoptimierter Verlängerung aufnehmen kann.

Derartige Stempel werden, wie in der DE 10 2014 003 726 beschrieben, einstückig hergestellt. Die hierbei genutzten additiven Fertigungsverfahren sind jedoch in ihrer Toleranzhaltigkeit relativ schlecht. D. h., die hohen Anforderungen an die Präzision der Kopfstücke sind ohne Nachbearbeitung nicht machbar. Das gilt auch für Fußstücke, die in erster Linie kleine Ebenheiten und Rechtwinkligkeiten in der Auflagefläche, sowie enge Parallelitäten in den Spannbereichen erfordern. Auch hier ist eine spanende Nachbearbeitung erforderlich.

Die einteilige Gestaltung der Stempeleinheit kann den Nachteil haben, dass die notwendige Hartbearbeitung des Kopfstückes schwierig ist, weil z. B. der Prozess des Drahtschneidens durch den Aufbau des darunterliegenden gestaltoptimierten Bereichs verhindert wird. Auch im Fußbereich ist die Bearbeitung erschwert.

Die DE 32 41 383 A1 offenbart eine Vorrichtung zum plastischen Umformen von Werkstoffen, z. B. durch Gesenkschmieden oder Fließpressen.

Die EP 1 764 173 A2 offenbart eine Vorrichtung gemäss dem Oberbegriff des Anspruchs 1 zum Herstellen eines Formteils aus einem Pulver. Die Vorrichtung umfasst Kolben-Zylinder-Systeme.

Die JP 2004-291046 A offenbart ein Verfahren und eine Vorrichtung zur Herstellung von Bauteilen aus Pulver. Es wird eine gesteuerte Entlastung der Stempel vorgeschlagen, um die Entstehung von Rissen im hergestellten Bauteil zu verhindern.

Aus der WO 01/12367 A2 ist eine Pulverpresse bekannt, mit der Zahnräder z. B. mit geneigter Verzahnung herstellbar sind.

Der Erfindung liegt daher die Aufgabe zugrunde, die genannten Nachteile zu beseitigen.

Diese Aufgabe wird mit ineinander gleitenden Stempeleinheiten einer Pulverpresse mit den Merkmalen des Anspruchs 1, einer Pulverpresse mit den Merkmalen des Anspruchs 13, einem Verfahren mit den Merkmalen des Anspruchs 14 und einem Einrichten der Pulverpresse mit den Merkmalen des Anspruchs 16 gelöst. Weitere vorteilhafte Ausgestaltungen und Weiterbildungen gehen aus den Unteransprüchen hervor. Die unabhängigen Ansprüche sind ein erster Entwurf, den Gegenstand der Erfindung zu beschreiben. Daher können ein oder mehrere der Merkmale aus den unabhängigen Ansprüchen durch ein oder mehrere Merkmale aus der Offenbarung ersetzt oder ergänzt oder aber auch gestrichen werden.

Es wird eine Stempeleinheit einer Pulverpresse vorgeschlagen, wobei die Stempeleinheit mindestens zweiteilig zusammengesetzt ist, dabei umfassend ein Kopfstück als erstes Teil und einen an das Kopfstück angeschlossenen, sich verbreiternden Bereich als zweiten Teil, wobei der sich verbreiternde Bereich sich bis auf einen Durchmessers eines Stempelhalters aufweitet, der an einem, dem Kopfstück entgegengesetzt liegendem Ende des sich verbreiternden Bereichs direkt anschließbar ist.

Eine Weiterbildung sieht vor, dass das Kopfstück und der sich verbreiternde Bereich aus unterschiedlichen Materialien mit unterschiedlicher Toleranz hergestellt sind. Eine weitere Weiterbildung sieht vor, dass das Kopfstück und der sich verbreiterende Bereich aus dem gleichen Material mit unterschiedlicher Toleranz hergestellt sind.

Bevorzugt ist eine Stempeleinheit, bei der das Kopfstück und der sich verbreiternde Bereich mittels unterschiedlicher Verfahren hergestellt sind. Weiterhin ist es bevorzugt, dass zumindest der sich verbreiternde Bereich mittels eines additiven Verfahrens hergestellt ist; das Kopfstück hingegen vorzugsweise gedreht wurde. Insbesondere kann das Kopfstück durch spangebende Verfahren, durch ein Gießverfahren und/oder durch Hartbearbeitung hergestellt werden. Eine mögliche Hartbearbeitung kann ein Pressen oder auch ein Oberflächenwalzen sein.

Die Nutzung von verschiedenen Teilen erlaubt es auch, dass eine Werkstoffauswahl freier ist. So können das Kopfstück und/oder das Fußstück aus einem Material gefertigt werden, was mittels additivem Herstellungsverfahren zumindest zur Zeit noch nicht bearbeitbar ist. Bevorzugt sind das Kopfstück und/oder das Fußstück aus jeweils einem Stahlwerkstoff hergestellt. Der Stahl kann gleich oder unterschiedlich sein. Ein noch vorhandenes Problem kann bei der Verwendung von Kohlenstoff bei einem Werkzeugstahl beim additiven Verfahren die dabei auftretende hohe Spannung sein, die beim Lasersintern hervorgerufen wird. Daher wird zum Beispiel vorgesehen, dass das Kopfstück aus einem Stahl mit hohem Verschleißschutz und hoher Zähigkeit konventionell hergestellt wird. Beispielsweise wird das Kopfstück mittels einer Verbindungstechnik auf dem sich verbreiternden Bereich aufgesetzt. Dazu können Verbindungsarten wie Kleben oder auch stoffschlüssige Verfahren, Sinterlöten, Schweißen, Eingießen und/oder Einsintern genutzt werden. Auch können durch Nutzung von Formschluß bzw. Form/Kraftschluß, beispielweise durch eine Presspassung, die Verbindung hergestellt werden. Eine lösbare Verbindung ist vor allem zerstörungsfrei ausgelegt. Eine derartige Lösung kann zum Beispiel eine Form/Kraftschlussverbindung wie einen Bajonettverschluß oder ähnliches umfassen.

Des Weiteren ist es vorteilhaft, wenn die Stempeleinheit derart aufgebaut ist, dass das Kopfstück kürzer ist als der sich verbreiternde Bereich. Eine weitere Ausgestaltung sieht vor, dass der sich verbreiternde Bereich ein Material aufweist, welches ein anderes Elastizitätsmodul, abgekürzt E-Modul, aufweist als das Material des Kopfstücks. Vorzugsweise ist das E-Modul des Materials des Kopfstücks größer als das E-Modul des Materials des sich verbreiternden Bereichs. In Bezug auf ein Fußstück kann beispielweise vorgesehen sein, dass das E-Modul des Materials des Fußstücks gleich oder annähernd gleich ist zum E-Modul des Kopfstücks. Eine weitere Ausgestaltung sieht vor, dass das E-Modul des Materials des Fußstücks auch größer sein kann als dasjenige des Kopfstücks. Bevorzugt ist das E-Modul des Werkstoffs des sich verbreiternden Bereichs kleiner als das E-Modul des Materials des Fußstücks und auch des E-Moduls des Materials des Kopfstücks.

Eine Weiterbildung sieht vor, dass die Stempeleinheit ein Fußstück umfasst, das an dem sich verbreiternden Abschnitt angeschlossen ist. Insbesondere bevorzugt ist es, wenn das Kopfstück und/oder das Fußstück lösbar oder unlösbar mit dem sich verbreiternden Abschnitt verbunden sind.

Gemäß einem weiteren Gedanken der Erfindung, der allein oder in Verbindung mit dem obigen Gedanken stehen kann, werden ineinander gleitende Stempeleinheiten einer Pulverpresse vorgeschlagen, aufweisend eine Mehrzahl an Stempeleinheiten, bevorzugt wie oben und auch noch nachfolgend näher beschrieben. Zumindest zwei der Stempeleinheiten, bevorzugt alle Stempeleinheiten, weisen einen sich verbreiternden Bereich auf, der sich konusförmig, insbesondere kegelförmig oder glockenförmig erweitert. Eine Ausgestaltung sieht vor, dass die ineinander gleitenden Stempel bevorzugt mit unterschiedlichem Verhältnis von Länge des Kopfstücks zu Länge des sich verbreiternden Abschnitts versehen sind.

Eine Weiterbildung der ineinander gleitenden Stempeleinheiten sieht vor, dass in einer gemeinsamen Endstellung die Füße der jeweiligen Stempeleinheiten bevorzugt in voneinander unterschiedliche Höhe enden. Eine weitere Ausgestaltung sieht vor, dass bei einer gemeinsamen Endstellung die mehrteiligen Stempeleinheiten zumindest in etwa, bevorzugt genau, auf einer gemeinsamen Höhe und damit Ebene enden. Wiederum ist erfindungsgemäss vorgesehen, dass die Stempeleinheiten im Vergleich zueinander eine annähernd gleiche Elastizität aufweisen. Wesentlich für den Elastizitätsausgleich ist hierbei der sich verbreiterende Bereich, der zwischen dem Kopf- und dem Fußstück liegt. Durch dessen konstruktive Gestalt und unter Berücksichtigung des E-Moduls des Werkstoffs und des sich ergebenden Elastizitätssensors ist Einfluß auf die Steifigkeit und damit auf ein Elastizitätsverhalten insbesondere beim Entspannen aus einem komprimierten Zustand nehmbar.

Eine weitere Ausgestaltung sieht beispielsweise für die ineinander gleitenden Stempeleinheiten vor, dass die Füße der Stempeleinheiten in einer gemeinsamen Endstellung in gleicher Höhe entlang einer Ebene enden.

Des Weiteren ist es bevorzugt, wenn bei den ineinander gleitenden Stempeleinheiten eine äußerste Stempeleinheit weniger einfedert als eine innere Stempeleinheit. Insbesondere bei einer Entspannung nach einem Pressen eines Pulverwerkstoffs erlaubt dieses eine Vergleichmäßigung der Entspannung zum Beispiel durch ein gesteuertes bzw. geregeltes Bewegen der jeweiligen Stempeleinheiten.

Gemäß einem weiteren Gedanken der Erfindung, der unabhängig wie auch mit den obigen und nachfolgenden Gedanken zusammenwirkend sein kann, wird eine Pulverpresse vorgeschlagen, die ineinander gleitende Stempeleinheiten aufweist. Diese können jedoch gemäß einer Ausgestaltung nicht nur zumindest zweiteilig sein, so wie oben und auch nachfolgend beschrieben. Vielmehr kann gemäß einer weiteren Ausgestaltung vorgesehen sein, dass eine Mischung aus einteiligen und zweiteiligen Stempeleinheiten vorgesehen ist. Die zweiteiligen Stempeleinheiten sind vorzugsweise so wie oben und nachfolgend beschrieben. Die einteiligen Stempeleinheiten sind zum Beispiel so ausgestaltet, wie es aus der oben angeführten DE 10 2014 003 726 hervorgeht, auf die im Rahmen der Offenbarung der Erfindung diesbezüglich verwiesen wird. Eine weitere Ausgestaltung sieht vor, dass die Pulverpresse auch nur einteilige Stempeleinheiten aus Kopfstück und sich erweiterndem Bereich nutzt, wobei zumindest zwei derartige Stempeleinheiten einen sich verbreitenden Bereich aufweisen wie oben und auch nachfolgend beschrieben.

Wiederum ein weiterer Gedanke, der unabhängig wie auch mit den obigen und nachfolgenden Gedanken zusammenwirkend sein kann, ist ein Verfahren zum Betrieb einer Pulverpresse, bei der ineinander gleitende Stempeleinheiten wie oben bzw. nachfolgend beschrieben genutzt und verfahren werden, wobei eine Überwachung in Form einer Steuerung oder Regelung eingesetzt wird, die einen Ausgleich zwischen einem unterschiedlichen Federn der ineinander gleitenden Stempeleinheiten bei einem Entlasten eines gepressten Werkstücks vornimmt.

Im Rahmen des Verfahrens erfolgt vorzugsweise eine elektronische Kompensation des Ausgleichs. Hierzu können ein oder mehrere Spannungs- und/oder Wegsensoren genutzt werden, die mit einem Steuergerät verbunden sind. Durch zum Beispiel einer Vorgabe hinsichtlich Weglängenunterschiede zwischen den einzelnen Stempeleinheiten durch die Geometrie des verpressten Bauteils kann eine Vergleichmäßigung der Entlastung über alle Stempeleinheiten beim Zurückziehen der Stempeleinheiten erfolgen. Ein Brechen des verpressten Grünlings kann dadurch verhindert werden.

Auch wird gemäß der Erfindung ein Einrichten einer Pulverpresse mit einem Satz ineinander gleitender Stempeleinheiten wie oben bzw. nachfolgend beschrieben vorgeschlagen, wobei diese zuerst zusammen eingesetzt und dann gemeinsam eingerichtet werden. Dieses ist ein Vorteil gegenüber dem bisherigen Einrichten, da dort jeder Stempel einzeln eingesetzt und sodann auch einzeln eingerichtet werden musste. Durch das gemeinsame Einrichten, ermöglicht durch den Aufbau der vorgeschlagenen Stempeleinheiten, verkürzt sich die Stillstandszeit der Pulverpresse erheblich.

Weitere vorteilhafte Ausgestaltungen und Weiterbildungen gehen aus den nachfolgenden Figuren hervor. Ein oder mehrere Merkmale aus ein oder mehreren Figuren können zusammen weitere Ausgestaltungen ergeben, ebenso auch in Verbindung mit den oben beschriebenen Merkmalen der Erfindung. Insbesondere sind die Figuren nur zur besseren Verdeutlichung der Erfindung, nicht aber zur Beschränkung derselben gedacht. Es zeigen:
- Fig. 1:: Eine Zusammenbauzeichnung im Halbschnitt eines aus drei Unterstempeleinheiten bestehenden Werkzeugaufbaus mit gestaltoptimierten Bereichen, hier nur im Unterstempelbereich; im Oberstempelbereich kann zum Beispiel ein Oberstempel genutzt werden, der keinen sich verbreiternden Bereich so, wie vorgeschlagen, besitzt.
- Fig. 2:: Eine Zusammenfassung aller drei Unterstempeleinheiten des Werkzeugaufbaus in jeweils verschiedener Ausgestaltung,
- Fig. 3 und Fig. 4:: Ein Kopfstück mit formschlüssiger Verbindung und ein Fußstück mit Schraubverbindung,
- Fig. 5:: Ein Kopfstück mit formschlüssiger Verbindung und gestaltoptimiertem Bereich, verbunden durch direktes Lasersintern mit einem konventionell gefertigtem Fußstück,
- Fig. 6:: Einen gestaltoptimierten Bereich, durch direktes Lasersintern mit dem konventionell gefertigtem Kopfstück verbunden,
- Fig. 7:: Einen gestaltoptimierten Bereich, durch z. B. Löten mit dem konventionell gefertigtem Kopfstück verbunden,
- Fig. 8 und Fig. 9:: Einen gestaltoptimierten Bereich, durch Klemmstück mit den konventionell gefertigten Kopfstücken, hier drei Elemente, verbunden,
- Fig. 10 und Fig. 11:: Einen gestaltoptimierten Bereich, durch Klemmstück verschraubt mit den konventionell gefertigten Kopfstücken, hier drei Elemente, verbunden,
- Fig. 12 und Fig. 13:: Ein Fußstück mit einer Schraubverbindung,
- Fig. 14:: Eine Ansicht von ineinander gleitenden Stempeleinheiten, und
- Fig. 15:: Eine Ansicht des bekannten Standes der Technik hinsichtlich einer Pulverpresse.

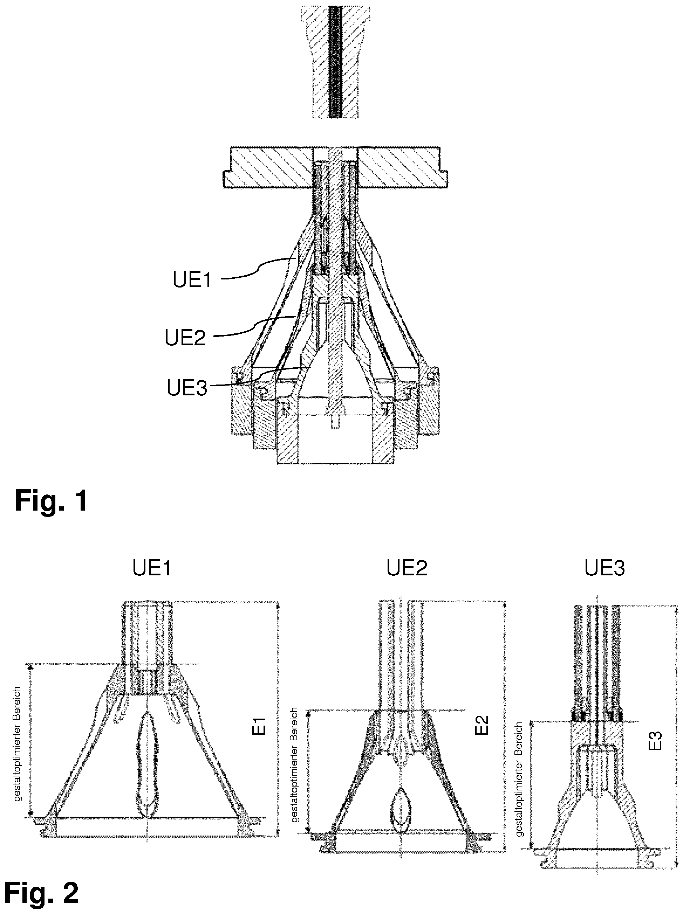

Fig. 1 zeigt eine Zusammenbauzeichnung im Halbschnitt eines aus drei Unterstempeleinheiten UE1, UE2, UE2 bestehenden Werkzeugaufbaus mit gestaltoptimierten Bereichen, hier nur im Unterstempelbereich. Durch eine Verbindungstechnologie, hier in Form einer Steck- bzw. Klemmverbindung, wird ein gestaltoptimierter, nahezu kegelförmiger Bereich mit Standard-Werkzeugkomponenten zu einer Unterstempeleinheit verbunden. Des Weiteren haben die Unterstempel jeweils hier unterschiedliche Höhen-Niveaus in der Anbindung zum Stempelhalter. Ein derartiger gestufter Aufbau hat vor allem den Zweck, die Verfahrwege durch die Höhenabstufung einfacher realisieren zu können. Dieses erlaubt, auf einen ansonsten eventuell notwendigen, senkrechten Bereich in der Stempeleinheit zu verzichten. Darüber hinaus ergibt sich außerdem ein besserer Kraftfluss in der jeweiligen Stempeleinheit.

Fig. 2 zeigt eine Zusammenfassung aller drei Unterstempeleinheiten des Werkzeugaufbaus. Alle Elastizitäten der Unterstempeleinheiten UE1, UE2 und UE3 sind bevorzugt identisch, insbesondere aber zumindest annähernd gleich. Die Unterschiede, die sich sonst aus den unterschiedlichen Werkzeuglängen ergeben, werden durch den gestaltoptimierten Bereich ausgeglichen. Die Elastizitäten, hier der Unterstempeleinheiten, E1, E2, E3 sind aufeinander abgestimmt, d. h. gleich oder nahezu gleich, je nach technischer Notwendigkeit. Das gleiche ist ebenfalls bei Oberstempeleinheiten machbar.

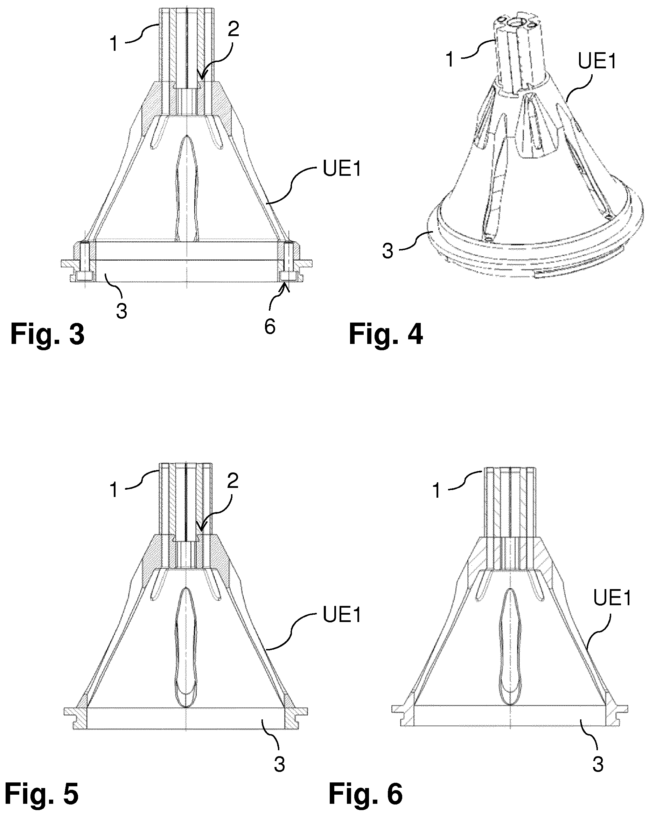

Fig. 3 und Fig. 4 zeigen ein Kopfstück 1 mit formschlüssiger Verbindung 2 und ein Fußstück 3 mit einer Schraubverbindung 6. Die dargestellte Stempeleinheit besteht somit aus dem Stempelkopfstück, der gestaltoptimierten Werkzeugverlängerung und dem verschraubten Stempelfußstück. Das Stempelkopfstück ist unabhängig in Bezug auf eine Materialwahl und kann zum Beispiel mittels eines additiven Verfahrens hergestellt werden. Bevorzugt sind ein spanenden Verfahren und/oder eine Hartbearbeitung. Mittels einer formschlüssigen Steckverbindung als Verbindungsmittel wird der gestaltoptimierte Verlängerungsbereich, der vorzugsweise durch ein additives Verfahren hergestellt wird, mit dem Stempelkopfstück zu einer Stempeleinheit verbunden. Der gestaltoptimierte Werkzeugverlängerungsbereich ist bevorzugt mit einem berechneten Elastizitätsausgleich zu den anderen Stempeleinheiten versehen, wobei beispielweise die Stempeleinheiten auf unterschiedlichen Werkzeugebenen stehen.

Fig. 5 zeigt ein Kopfstück 1 mit formschlüssiger Verbindung 2 und gestaltoptimiertem Bereich, verbunden durch direktes Lasersintern mit einem konventionell gefertigten Fußstück 3. Auch hier kann ein Stempelkopfstück zum Beispiel mittels eines additiven Verfahrens, eines spanenden, urformenden, insbesondere gießenden und/oder hartbearbeitenden Verfahrens wie Pressen oder Walzen hergestellt werden. Es besteht hierfür ebenfalls eine unabhängige Materialwahl. Eine Verbindung zwischen dem gestaltoptimierten Verlängerungsbereich und dem Fuß wird hier durch direktes Lasersintern auf dem Fuß hergestellt. Der Stempelfuß selbst kann ebenfalls aus unterschiedlichsten Materialien hergestellt sein, ebenfalls zum Beispiel auch mittels eines additiven Verfahren gefertigt.

Fig. 6 zeigt einen gestaltoptimierten Bereich, der durch ein direktes Lasersintern mit einem konventionell gefertigten Kopfstück 1 verbunden ist. Bei dieser Ausgestaltung ist der gestaltoptimierte Bereich mit dem Fußstück 3 einstückig durch ein additives Fertigungsverfahren hergestellt. Das Stempelkopfstück ist hingegen davon losgelöst als Einzelteil hergestellt worden. Eine Verbindung zwischen dem Kopfstück und dem gestaltoptimierten Bereich erfolgt hier mittels eines direkten Lasersinterns auf dem Kopfstück.

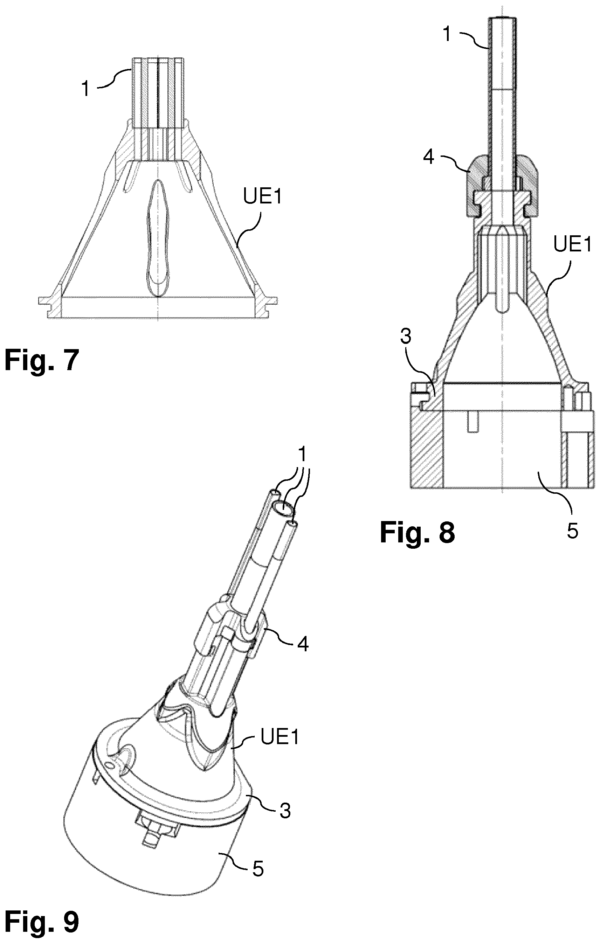

Fig. 7 zeigt einen gestaltoptimierten Bereich, der z. B. durch Löten mit dem konventionell gefertigten Kopfstück 1 verbunden ist. Auch hier ist der gestaltoptimierte Bereich mit dem Fußstück 3 als eine additiv gefertigte Einheit vorgesehen.

Fig. 8 und Fig. 9 zeigen einen gestaltoptimierten Bereich, der durch ein Klemmstück 4 mit den konventionell gefertigten Kopfstücken 1, hier in Form von drei Elementen, verbunden ist. Die Stempeleinheit besteht aus einem oder mehreren Stempelkopfstücken, einem Verbindungselement in Form eines Fußstücks 3 und der gestaltoptimierten Werkzeugverlängerung. Der gestaltoptimierte Werkzeugverlängerungsbereich sorgt für den Elastizitätsausgleich zwischen den Stempeleinheiten. Unten an der gestaltoptimierten Werkzeugverlängerung ist des Weiteren der Stempelhalter 5 angebracht. Dieser kann angeschraubt oder auch mittels eines Bajonettverschlusses verbunden werden.

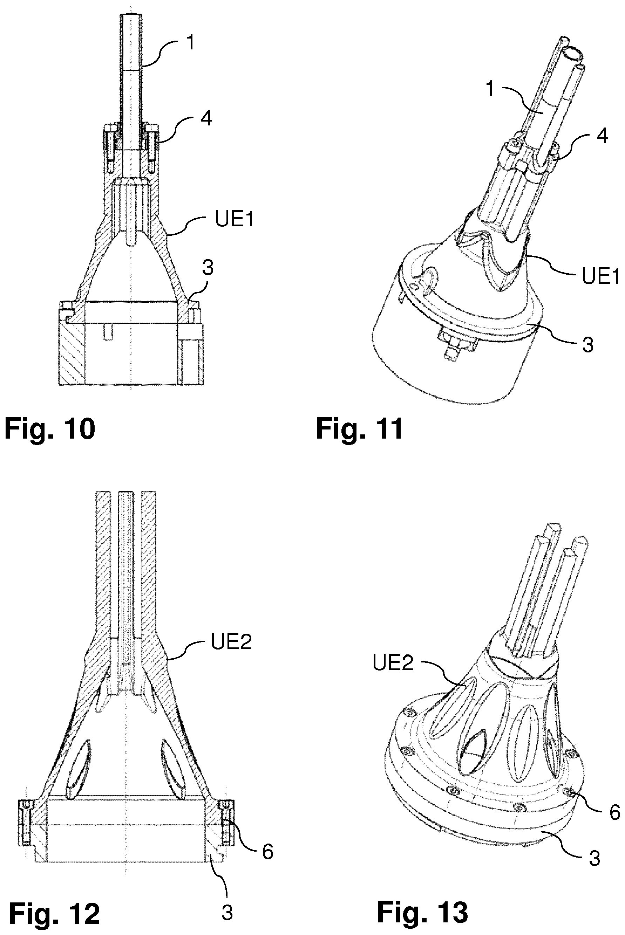

Fig. 10 und Fig. 11 zeigen einen gestaltoptimierten Bereich, der durch ein Klemmstück hindurch verschraubt ist mit den konventionell gefertigten Kopfstücken, hier drei Elemente.

Fig. 12 und Fig. 13 zeigen ein Fußstück 3 mit einer Schraubverbindung 6. Mittels dieser wird das Stempelfußstück angeschraubt.

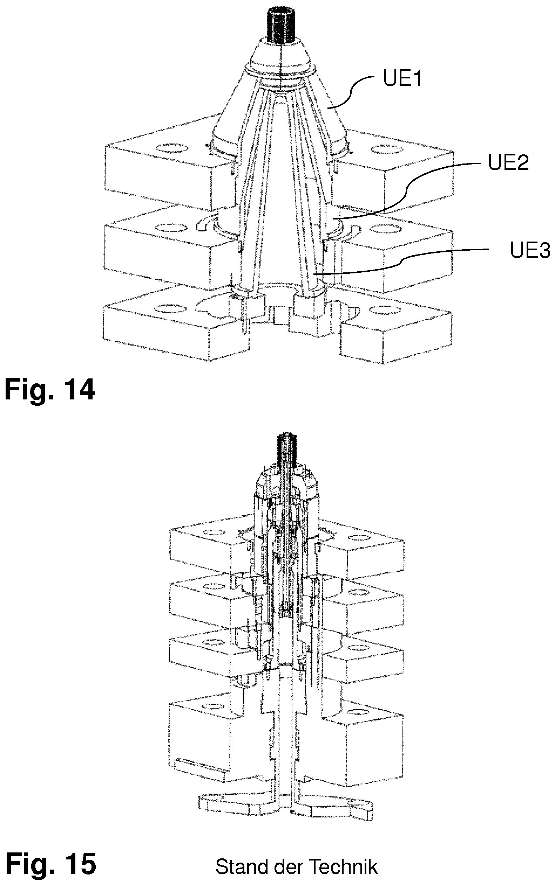

Fig. 14 zeigt eine Ansicht von ineinander gleitenden Stempeleinheiten. Bei der dargestellten Ansicht sind die Unterstempel sich abstützend. Das ist nur eine mögliche Ausgestaltung. Eine Abstützung kann auch in anderer Weise erfolgen.

Fig. 15 zeigt eine schematische Ansicht eines bekannten Standes der Technik hinsichtlich einer Pulverpresse. Wie im Vergleich zu Fig. 14 aber auch Fig. 1 ersichtlich, ist diese bekannte Lösung höher bauend und ermöglicht nicht dieses nahe Aneinanderverfahren beim Einrichten, wie es die nunmehr vorgeschlagene Lösung ermöglicht.

## Patentansprüche

1. Ineinander gleitende Stempeleinheiten einer Pulverpresse, aufweisend eine Mehrzahl an Stempeleinheiten, wobei zumindest zwei der Stempeleinheiten mindestens zweiteilig zusammengesetzt sind, dabei jeweils umfassend ein Kopfstück (1) als erstes Teil und einen an das Kopfstück (1) angeschlossenen, sich verbreiternden Bereich als zweites Teil, wobei der sich verbreiternde Bereich sich bis auf einen Durchmessers eines Stempelhalters (5) aufweitet, der an einem, dem Kopfstück (1) entgegengesetzt liegendem Ende des sich verbreiternden Bereichs direkt anschließbar ist; wobei sich der verbreiternde Bereich konusförmig, insbesondere kegelförmig oder glockenförmig erweitert; **dadurch gekennzeichnet, dass** zumindest die zwei Stempeleinheiten im Vergleich zueinander eine annähernd gleiche Elastizität aufweisen, und dass durch die konstruktive Gestalt und unter Berücksichtigung des E-Moduls des Werkstoffes des sich verbreiternden Bereichs Einfluss auf die Steifigkeit und damit auf ein Elastizitätsverhalten insbesondere beim Entspannen aus einem komprimierten Zustand nehmbar ist.

2. Ineinander gleitende Stempeleinheiten nach Anspruch 1, **dadurch gekennzeichnet, dass** das Kopfstück (1) und der sich verbreiternde Bereich aus unterschiedlichen Materialien mit unterschiedlicher Toleranz hergestellt sind.

3. Ineinander gleitende Stempeleinheiten nach Anspruch 1, **dadurch gekennzeichnet, dass** das Kopfstück (1) und der sich verbreiternde Bereich aus dem gleichen Material mit unterschiedlicher Toleranz hergestellt sind.

4. Ineinander gleitende Stempeleinheiten nach Anspruch 1, 2 oder 3, **dadurch gekennzeichnet, dass** das Kopfstück (1) und der sich verbreiternde Bereich mittels unterschiedlicher Verfahren hergestellt sind.

5. Ineinander gleitende Stempeleinheiten nach Anspruch 4, **dadurch gekennzeichnet, dass** der sich verbreiternde Bereich mittels eines additiven Verfahrens hergestellt ist, das Kopfstück (1) hingegen mittels eines spanenden, gießenden und/oder eines hartbearbeitenden Verfahrens hergestellt ist, vorzugsweise mittels Drehen und/oder Pressen.

6. Ineinander gleitende Stempeleinheiten nach einem der vorhergehenden Ansprüche, **dadurch gekennzeichnet, dass** das Kopfstück (1) kürzer ist als der sich verbreiternde Abschnitt.

7. Ineinander gleitende Stempeleinheiten nach einem der vorhergehenden Ansprüche, **dadurch gekennzeichnet, dass** die Stempeleinheit ein Fußstück (3) umfasst, das an dem sich verbreiternden Bereich angeschlossen ist, vorzugsweise mittels eines Bajonettverschlusses.

8. Ineinander gleitende Stempeleinheiten nach einem der vorhergehenden Ansprüche, **dadurch gekennzeichnet, dass** das Kopfstück (1) und/oder das Fußstück (3) lösbar oder unlösbar mit dem sich verbreiternden Bereich verbunden ist.

9. Ineinander gleitende Stempeleinheiten nach einem der vorhergehenden Ansprüche, **dadurch gekennzeichnet, dass** die ineinander gleitenden Stempeleinheiten mit jeweils unterschiedlichem Verhältnis von Länge des Kopfstücks (1) zu Länge des sich verbreiternden Bereichs versehen sind.

10. Ineinander gleitende Stempeleinheiten nach einem der vorhergehenden Ansprüche 1 bis 8, **dadurch gekennzeichnet, dass** in einer gemeinsamen Endstellung die Füße der jeweiligen Stempeleinheiten in voneinander unterschiedlichen Höhe enden.

11. Ineinander gleitende Stempeleinheiten nach einem der vorhergehenden Ansprüche, **dadurch gekennzeichnet, dass** die Füße der Stempeleinheiten in einer gemeinsamen Endstellung in gleicher Höhe entlang einer Ebene enden.

12. Ineinander gleitende Stempeleinheiten nach einem der vorhergehenden Ansprüche, **dadurch gekennzeichnet, dass** eine äußerste Stempeleinheit weniger einfedert als eine innere Stempeleinheit.

13. Pulverpresse aufweisend ineinander gleitende Stempeleinheiten nach einem der Ansprüche 1 bis 12.

14. Verfahren zum Betrieb einer Pulverpresse, bei der ineinander gleitende Stempeleinheiten nach einem der vorhergehenden Ansprüche 1 bis 12 verfahren werden, wobei eine Überwachung in Form einer Steuerung oder Regelung eingesetzt wird, die einen Ausgleich zwischen einem unterschiedlichen Fedem der ineinander gleitenden Stempeleinheiten bei einem Entlasten eines gepressten Werkstücks vornimmt.

15. Verfahren nach Anspruch 14, **dadurch gekennzeichnet, dass** eine elektronische Kompensation des Ausgleichs erfolgt.

16. Einrichten einer Pulverpresse mit einem Satz ineinander gleitender Stempeleinheiten nach einem der vorhergehenden Ansprüche, **dadurch gekennzeichnet, dass** diese zuerst zusammen eingesetzt und dann gemeinsam eingerichtet werden.

## Claims

1. Punch units of a powder press that slide in one another punch unit, having a plurality of punch units, wherein at least two of the the punch units are assembled from at least two parts, in each case comprising a headpiece (1) as the first part and a widening region, adjoining the headpiece (1), as the second part, wherein the widening region flares to a diameter of a punch holder (5) which can be attached directly to an end, located opposite the headpiece (1), of the widening region, wherein the widening region widens conically, in particular in the shape of a cone or bell; **characterized in that** at least two of the punch units have an approximately equal elasticity in comparison with one another, and that by means of the constructional shape and taking into account the modulus of elasticity of the material of the widening region influence can be exerted on the rigidity and therefore on an elasticity behavior, particularly when relaxing from a compressed state.

2. Punch units that slide in one another according to claim 1, **characterized in that** the headpiece (1) and the widening region are produced from different materials with a different tolerance.

3. Punch units that slide in one another according to claim 1, **characterized in that** the headpiece (1) and the widening region are produced from the same material with a different tolerance.

4. Punch units that slide in one another according to claim 1, 2 or 3, **characterized in that** the headpiece (1) and the widening region are produced by means of different methods.

5. Punch units that slide in one another according to claim 4, **characterized in that** the widening region is produced by means of an additive method, the headpiece (1), on the other hand, is produced by means of a cutting, casting and/or a hard-machining method, preferably by means of turning and/or pressing.

6. Punch units that slide in one another according to one of the preceding claims, **characterized in that** the headpiece (1) is shorter than the widening section.

7. Punch units that slide in one another according to one of the preceding claims, **characterized in that** the punch unit comprises a foot piece (3), which is attached to the widening region, preferably by means of a bayonet catch.

8. Punch units that slide in one another according to one of the preceding claims, **characterized in that** the headpiece (1) and/or the foot piece (3) is connected detachably or non-detachably to the widening region.

9. Punch units that slide in one another according to one of the preceding claims, **characterized in that** the punch units that slide in one another are provided with a respectively different ratio of the length of the headpiece (1) to the length of the widening region.

10. Punch units that slide in one another according to one of the preceding claims 1 to 8, **characterized in that**, in a common end position, the feet of the respective punch units end at heights that differ from one another.

11. Punch units that slide in one another according to one of the preceding claims, **characterized in that**, in a common end position, the feet of the punch units end at the same height along a plane.

12. Punch units that slide in one another according to one of the preceding claims, **characterized in that** an outermost punch unit compresses less than an inner punch unit.

13. Powder press having punch units that slide in one another as claimed in one of claims 1 to 12.

14. Method for operating a powder press, in which punch units that slide in one another as claimed in one of the preceding claims 1 to 12 are operated, wherein monitoring in the form of control or regulation is used, which performs an equalization between different compressions of the punch units that slide in one another as a load on a pressed workpiece is relieved.

15. Method according to claim 14, **characterized in that** electronic compensation of the equalization is carried out.

16. Setup of a powder press with a set of punch units that slide in one another according to one of the preceding claims, **characterized in that** said units are first inserted together and then set up jointly.

## Revendications

1. Unités poinçons, glissant les unes dans les autres, d'une presse à poudre, présentant une pluralité d'unités poinçons, au moins deux des unités poinçons étant composées d'au moins deux parties, en l'occurrence comprenant respectivement une pièce de tête (1) en tant que première partie et une région évasée raccordée à la pièce de tête (1) en tant que deuxième partie, la région évasée s'élargissant jusqu'à un diamètre d'un support de poinçon (5) qui peut être raccordé directement à une extrémité de la région évasée opposée à la pièce de tête (1) ; la région évasée s'élargissant en forme de cône, en particulier en forme de quille ou en forme de cloche;
**caractérisées en ce**
**qu'**au moins les deux unités poinçons présentent une élasticité approximativement égale par comparaison l'une par rapport à l'autre, et **en ce que** grâce à la forme structurale et en prenant compte du module d'élasticité de la matière de la région évasée, une influence peut être exercée sur la rigidité et donc sur un comportement d'élasticité en particulier lors de la détente à partir d'un état comprimé.

2. Unités poinçons glissant les unes dans les autres selon la revendication 1, **caractérisées en ce que** la pièce de tête (1) et la région évasée sont fabriquées à partir de matériaux différents avec une tolérance différente.

3. Unités poinçons glissant les unes dans les autres selon la revendication 1, **caractérisées en ce que** la pièce de tête (1) et la région évasée sont fabriquées à partir du même matériau avec une tolérance différente.

4. Unités poinçons glissant les unes dans les autres selon la revendication 1, 2 ou 3, **caractérisées en ce que** la pièce de tête (1) et la région évasée sont fabriquées grâce à un procédé différent.

5. Unités poinçons glissant les unes dans les autres selon la revendication 4, **caractérisées en ce que** la région évasée est fabriquée grâce à un procédé additif, la pièce de tête (1) est fabriquée par contre grâce à un procédé d'enlèvement de copeaux, de coulée et/ou d'usinage dur, de préférence par tournage et/ou pressage.

6. Unités poinçons glissant les unes dans les autres selon l'une des revendications précédentes, **caractérisées en ce que** la pièce de tête (1) est plus courte que la section évasée

7. Unités poinçons glissant les unes dans les autres selon l'une des revendications précédentes, **caractérisées en ce que** l'unité poinçon comprend une pièce de pied (3) qui est raccordée à la région évasée, de préférence au moyen d'une fermeture à baïonnette.

8. Unités poinçons glissant les unes dans les autres selon l'une des revendications précédentes, **caractérisées en ce que** la pièce de tête (1) et/ou la pièce de pied (3) est/sont reliée(s) de manière détachable ou non détachable à la région évasée.

9. Unités poinçons glissant les unes dans les autres selon l'une des revendications précédentes, **caractérisées en ce que** les unités poinçons glissant les unes dans les autres sont pourvues respectivement d'un rapport différent de la longueur de la pièce de tête (1) à la longueur de la région évasée.

10. Unités poinçons glissant les unes dans les autres selon l'une des revendications précédentes 1 à 8, **caractérisées en ce que**, dans une position finale commune, les pieds des unités poinçons respectives se terminent à des hauteurs différentes les unes des autres.

11. Unités poinçons glissant les unes dans les autres selon l'une des revendications précédentes, **caractérisées en ce que** les pieds des unités poinçons dans une position finale commune se terminent à la même hauteur le long d'un plan.

12. Unités poinçons glissant les unes dans les autres selon l'une des revendications précédentes, **caractérisées en ce qu'**une unité poinçon la plus à l'extérieur se comprime moins qu'une unité poinçon intérieure.

13. Presse à poudre présentant des unités poinçons glissant les unes dans les autres selon l'une des revendications 1 à 12.

14. Procédé de fonctionnement d'une presse à poudre, dans lequel des unités poinçons glissant les unes dans les autres selon l'une des revendications précédentes 1 à 12 sont déplacées, une surveillance sous la forme d'une commande ou d'une régulation étant utilisée, laquelle surveillance effectue une égalisation entre différentes compressions des unités poinçons glissant les unes dans les autres lorsqu'une charge sur une pièce pressée est atténuée.

15. Procédé selon la revendication 14, **caractérisé en ce qu'**une compensation électronique de l'égalisation s'effectue.

16. Réglage d'une presse à poudre dotée d'un ensemble d'unités poinçons glissant les unes dans les autres selon l'une des revendications précédentes, **caractérisé en ce que** celles-ci sont tout d'abord insérées ensemble puis réglées ensemble.
